# EUROPEAN PATENT SPECIFICATION

(11) **EP 0 419 262 B1**
(45) Date of publication and mention of the grant of the patent: **13.03.1996**
(21) Application number: 90310307.5
(22) Date of filing: 20.09.1990
(51) Int. Cl.: H01J 29/87

(54) **Tension band for a cathode ray tube**
Implosionsschutzband für eine Kathodenstrahlröhre
Anneau anti-implosion d'un tube à rayons cathodiques

(30) Priority: 20.09.1989 KR 1371489; 02.06.1990 KR 816590
(43) Date of publication of application: 27.03.1991
(73) Proprietor: SAMSUNG DISPLAY DEVICES CO., LTD., Hwaseong-gun, Kyungki-do (KR)
(72) Inventor: Lim, Hyeong-Sub, Puk-tu, Pusan (KR); Hwang, Young-Min, Sangbukmyeon, Ulju-gun, Kyungsangnam-do (KR)
(74) Representative: Crawford, Fiona Merle

(56) References cited:
- DD-C- 152 880
- US-A- 4 701 802
- PATENT ABSTRACTS OF JAPAN vol. 12, no. 256 (E-635)(3103) July 19, 1988 & JP-A- 63 43 246 (NEC ) February 24, 1988

## Description

The present invention relates to implosion-prevention band and cathode ray tube fastened therewith, and in particular, to a tension band wherein the materials and the structure are improved.

Generally, a tension band for a cathode ray tube is placed tightly around the skirt of a facepanel of the cathode ray tube to prevent implosion of the cathode ray tube by restraining the expansion of cracks in the facepanel when strong pressure or shock is exerted on the facepanel, causing the cathode ray tube to implode, due to a high-vacuum in the cathode ray tube.

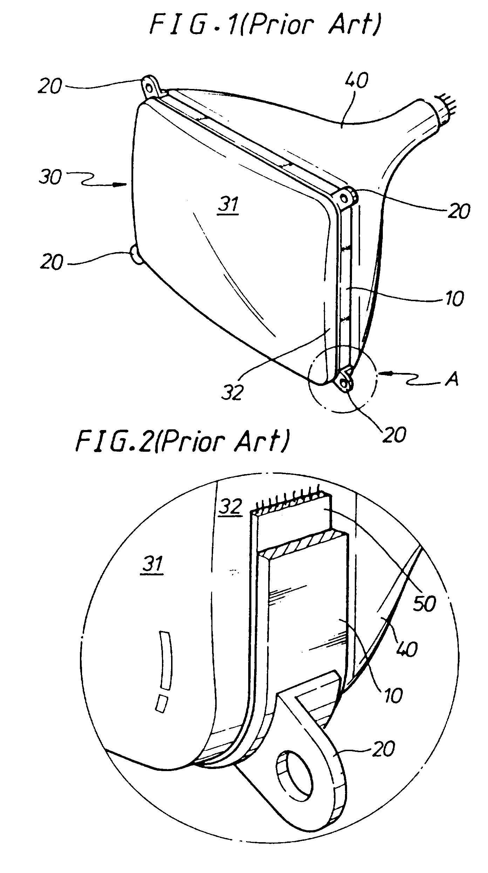

As illustrated in Figures 1 and 2 of the accompanying drawings, a conventional tension band 10 is made of a metal having a high tensile force, and apertured mounting lugs 20 are fixed to the corners of the tension band by welding. The tension band 10 is placed tightly around both the skirt of the facepanel 30, i.e., banding portion 32, and the mold match line between the facepanel 30 and a funnel 40, and drawn up to a very high tension. When the tension band is mounted on the cathode ray tube, an adhesive tape 50 made of heat-resist material is interposed between the tension band 10 and banding portion 32, so that the tension band 10 is affixed to the skirt of the facepanel 30, while being spaced apart from the banding portion 32. When the tension band 10 is tightly placed around the skirt of the facepanel, the adhesive tape 50 is employed to prevent the banding portion 32 from directly contacting with the tension band 10 which is subjected to heat, since the banding portion is susceptible to heat. When the tension band 10 is affixed to the cathode ray tube, even if the cathode ray tube is undergoing implosion, the metallic tension band, whose surface is smooth, is securely fastened to the predetermined portion of the cathode ray tube by the use of the adhesive tape 50, and does not separate from the banding portion 32. Therefore, the tension band 10 is adapted to minimize the implosion-induced violent scattering of the facepanel.

However, the conventional tension band system having the aforesaid structure and the cathode ray tube fastened therewith have problems which will be described below.

First of all, as described above, the tension band is made of metal having high tensile force and the adhesive tape for insulating is used, with the obvious consequence of a high manufacturing cost. Moreover, in order to place the tension band tightly around the skirt of the facepanel, intense heat energy is required for thermal expansion of the metallic tension band, and deterioration of the tension band quality can occur, resulting in weakening of the tensile force, due to the direct heating by flame. An arrangement of precise welding devices is necessary to install the mounting lug, which is made by a separate manufacturing process, at each corner of the tension band. In addition, another separate welding device is needed to prepare the tension band in a loop shape. During the tension band manufacturing processes, rigid control of precise welding is required, since the width of the seam portion of the metal band has an ultimate influence on the banding strength against the banding portion of the cathode ray tube.

The present invention is intended to obviate these and other problems of the conventional system.

Accordingly, it is an objet of the present invention to provide a tension band wherein the material and the structure are greatly improved.

It is an object of an embodiment of the present invention to provide a cathode ray tube fastened with the present tension band wherein the inner circumference of the tension band as against the outer circumference of the panel of the cathode ray tube is properly adjusted to achieve the optimum tensile force of the tension band.

Accordingly, the invention provides a tension band which comprises a single band unit having no seam therein and is made of synthetic resin containing polyamide and glass fiber.

Preferably, an adhesive means is applied to the inner side of the tension band.

According to another aspect of the present invention, there is provided a cathode ray tube fastened with a tension band which comprises a single band unit having no seam and is made of synthetic resin containing polyamide and glass fiber.

Embodiments of the invention will now be described by way of example with reference to the accompanying drawings, in which:
Figure 1 is a schematic perspective view showing a conventional tension band and a cathode ray tube fastened therewith;
Figure 2 is a partially enlarged view of the section A of the conventional tension band fastening the cathode ray tube shown in Figure 1;
Figure 3 is a schematic perspective view of an embodiment of a tension band of the present invention and a cathode ray tube fastened therewith;
Figure 4 is a partially enlarged view of section A′ shown in Figure 3; and
Figure 5 is an extracted enlarged view of a tension band of a further embodiment of the invention and a cathode ray tube fastened therewith, which corresponds to that view shown in Figure 4.

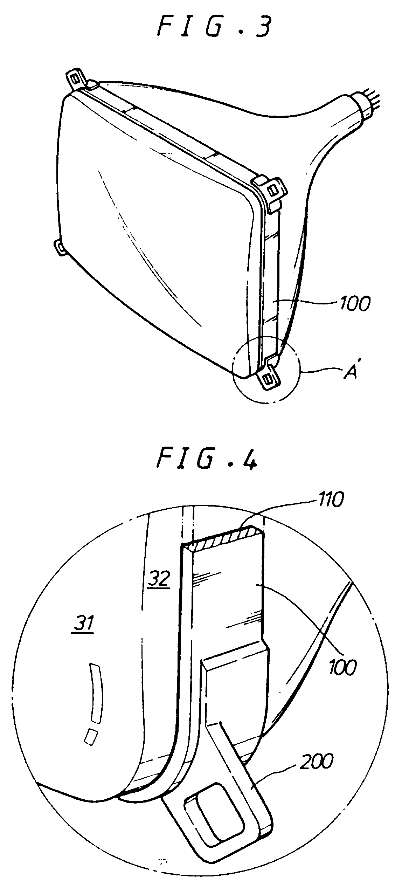

Figure 3 illustrates a cathode ray tube fastened with a tension band according to an embodiment of the present invention, of which section A′ is illustrated in enlargement in Figure 4. The tension band 100, is placed tightly around the skirt of a facepanel, i.e., banding portion 32 under very high tensile strength. The tension band 100, may be made by injection molding of a kind of engineering plastics material generally containing about 70 to 30 percent polyamide and about 30 to 70 percent glass fiber, and is integrally formed with mounting lug 200 at each corner thereof. Alternatively, however, the tension band and the mounting lugs can be separately formed and combined with each other.

In manufacturing the tension band, the length of the glass fiber may be about 3 to 12 mm and the diameter of which is preferably 6 to 13 µm. This type of tension band 100 may be manufactured by injection molding under high pressure, thereby having much higher tensile force than the 650kg/cm which is the requisite tensile force in a tension band of a cathode ray tube, and having an elastic recovery rate of within 5%.

In view of the co-efficient of thermal expansion, the tensile strength and elastic recovery rate of the material, the ratio of the inner circumferential length of the tension band 100 against the outer circumferential length of the surface of the banding portion is set in the range of about 99.79 to 99.13% where the glass fibre content ratio is 30%, about 99.13 to 99.51% where it is 50%, and about 99.51 to 99.90% where it is 60%, respectively.

An adhesive 110, such as, for example, ordinary adhesive or epoxy resin or the like, which is apt to melt on heating, is applied to the inner side of the tension band, contacting a banding portion 32, so as to prevent the tension band 100 from sliding on the banding portion. The adhesive 110 melted in solvent is applied in fluid-state to the inner side of the tension band 100, and then solidified. It is preferable that the adhesive becomes sticky upon being subjected to heat of about 150 to 200°C. An adhesive band, made of the same material as the adhesive, may be attached instead of applying the adhesive.

In order to increase the conductivity of the tension band, conductive substances such as graphite or ferrite can be added to the materials of the tension band, so that static electricity on the surface of the screen of the cathode ray tube may be effectively lowered through electrical connection of the tension band with conductive film coated on the surface of the screen.

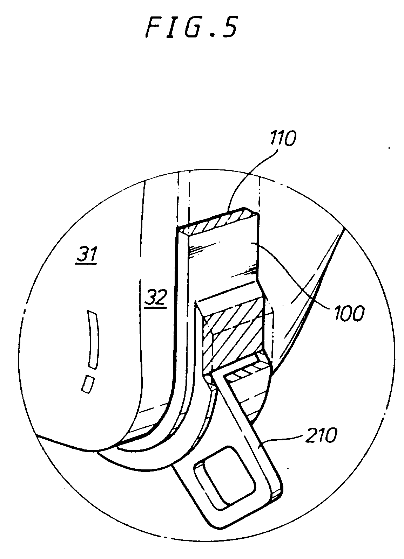

A tension band according to a further embodiment of the present invention as illustrated in Figure 5, can be combined with a metallic or non-metallic mounting lug 210, separately formed from the tension band, at each corner thereof. A separately formed mounting lug may be incorporated with the tension band during the process of injection molding of the tension band. Because of the thermoplastic property of the band material, to put the tension band around the cathode ray tube an indirect heating method using hot air, or a heating medium such as hot oil, can be used instead of direct heating by flame, until the thermal expansion of the tension band is sufficiently effected under the temperature level of about 150 to 200°C , whereby the tension band is tightly fastened around the cathode ray tube without any damage or deformation of the tension band. The heating temperature should be kept in the aforesaid range, because a heavy load should be applied to fasten the tension band if the heating temperature is equal to or below 150°C and, on the contrary, the deformation of the material occurs if the temperature is above 200°C.

When the tension band is placed around the cathode ray tube under the above-mentioned conditions, the adhesive applied to the inner side of the tension band is melted by heat, and after being mounted on the banding portion, the melted adhesive is cooled and solidified so that the tension band is securely attached to around the skirt of the facepanel. A heating method by ultrasonic can be adapted for heating the tension band according to the present invention.

During the manufacturing processes of the tension band and the cathode ray tube fastened therewith, the inventors have confirmed that static electricity travelling on the screen can be passed through the tension land to the ground, due to the low surface resistance of the non-conductive tension band. In particular, if a small amount of graphite is added to the materials of the tension band, the band thus having a small conductivity, the elimination of the static electricity on the surface of the screen was improved. The tension band according to the present invention is relatively soft and its thermal conductivity is lower than that of the metallic band, so that the conventional adhesive tape is not essential. Moreover, because the mounting lug can be integrally molded with the tension band, the separate manufacturing process or welding process for the mounting lug, which were necessary in the prior art, are not necessary. Also, the thermal energy required to mount the tension band is much reduced compared with the known metallic tension band, thereby bringing about an energy saving and thus resulting in a reduction in manufacturing cost. The tension band, after being mounted on the cathode ray tube, has more stable tensile force than any other conventional implosion-prevention bands, which partially results from the use of indirect heating by hot air or ultrasonic heating, as opposed to the conventional direct heating by a flame, so that the local damage of the material ty thermal impact does not occur. Furthermore, in connection with the prevention of implosion, the tension band according to the present invention is securely affixed to the banding portion of the cathode ray tube and, consequently, the tension band effectively prevents crack expansion and restrains violent inward scattering of the cathode ray tube induced by implosion thereof.

## Claims

1. A tension band for a cathode ray tube wherein the tension band (100) is a single band unit having no seam therein and is made of synthetic resin containing polyamide and glass fiber.

2. A tension band for a cathode ray tube in claim 1 wherein an adhesive means (110) is provided over the inner surface of said band.

3. A tension band as claimed in claim 2, wherein said adhesive means (110) is made of material melted by heating.

4. A tension band as claimed in claim 3, wherein said adhesive means (110) is melted to have adhesion at the temperature level of 150 to 200°C.

5. A tension band for a cathode ray tube as claimed in any preceding claim, wherein the material of the tension band includes conductive material.

6. A tension band as claimed in claim 5, wherein said conductive material is a least one selected from graphite and ferrite.

7. A tension band as claimed in any preceding claim, wherein the length of said glass fiber is in the range of 3 to 12 mm.

8. A tension band as claimed in any preceding claim wherein the diameter of the glass fiber is in the range of 6 to 13 µm.

9. A tension band as claimed in any preceding claim, wherein the content ratio of said polyamide to glass fiber is about 3:7 to 7:3.

10. A tension band as claimed in any preceding claim, wherein a plurality of mounting lugs (200;210) are combined with the outer side of said band.

11. A tension band as claimed in claim 10, wherein said mounting lugs (200) are integrally formed with said band.

12. A tension band as claimed in claim 10, wherein said mounting lugs (210) are made separately and are embedded in the outer surface of said band.

13. A tension band as claimed in claim 12, wherein the mounting lugs are of metallic material.

14. A tension band as claimed in claim 12, wherein the mounting lugs are of non-metallic material.

15. A tension band as claimed in any preceding claim, wherein the inner circumference of said tension band in relation to the outer circumference of the skirt portion (32) of the panel of the cathode ray tube is in the range 98.79 to 99.90% before said band is mounted on the cathode ray tube.

16. A cathode ray tube comprising a panel having a skirt portion (32) thereof, wherein the skirt portion is fastened with a tension band as claimed in any preceding claim.

## Patentansprüche

1. Spannband für eine Kathodenstrahlröhre, wobei das Spannband (100) eine einzige Bandeinheit ohne Naht ist und aus einem Polyamid und Glasfasern enthaltenden synthetischen Harz hergestellt ist.

2. Spannband für eine Kathodenstrahlröhre in Anspruch 1, wobei über der inneren Oberfläche des Bandes ein Klebemittel (110) vorgesehen ist.

3. Spannband nach Anspruch 2, wobei das Klebemittel (110) aus einem durch Erhitzen geschmolzenen Material hergestellt ist.

4. Spannband nach Anspruch 3, bei dem das Klebemittel (110) zur Erreichung einer Adhäsion bei einem Temperaturwert von 150 bis 200 °C geschmolzen ist.

5. Spannband für eine Kathodenstrahlröhre nach einem vorhergehenden Anspruch, wobei das Material des Spannbandes leitendes Material enthält.

6. Spannband nach Anspruch 5, bei dem das leitende Material mindestens eines ausgewählt aus Graphit und Ferrit ist.

7. Spannband nach einem der vorhergehenden Ansprüche, wobei die Länge der Glasfaser im Bereich von 3 bis 12 mm liegt.

8. Spannband nach einem der vorhergehenden Ansprüche, wobei der Durchmesser der Glasfaser im Bereich von 6 bis 13 µm ist.

9. Spannband nach einem der vorhergehenden Ansprüche, wobei das Anteilsverhältnis des Polyamid zu Glasfaser etwa 3:7 bis 7:3 ist.

10. Spannband nach einem der vorhergehenden Ansprüche, wobei eine Vielzahl von Anbringungsansätzen (200, 210) mit der Außenseite des Bandes kombiniert ist.

11. Spannband nach Anspruch 10, wobei die Anbringungsansätze (200) einstückig mit dem Band gebildet sind.

12. Spannband nach Anspruch 10, wobei die Anbringungsansätze (210) getrennt hergestellt und in die äußere Oberfläche des Bandes eingebettet sind.

13. Spannband nach Anspruch 12, wobei die Anbringungsansätze aus metallischem Material sind.

14. Spannband nach Anspruch 12, wobei die Anbringungsansätze aus nichtmetallischem Material sind.

15. Spannband nach einem der vorhergehenden Ansprüche, wobei der innere Umfang des Spannbandes in Relation zu dem äußeren Umfang des Randabschnittes (32) der Scheibe der Kathodenstrahlröhre im Bereich von 98,79 bis 99,90 % vor dem Anbringen des Bandes an der Kathodenstrahlröhre liegt.

16. Kathodenstrahlröhre mit einer Scheibe mit einem Randabschnitt (32), wobei der Randabschnitt mit einem Spannband nach einem der vorhergehenden Ansprüche befestigt ist.

## Revendications

1. Bande de tension pour un tube à rayons cathodiques, la bande de tension (100) étant une unique unité de bande ne comportant pas de joint en son sein et étant réalisée en une résine synthétique contenant du polyamide et des fibres de verre.

2. Bande de tension pour un tube à rayons cathodiques selon la revendication 1, dans laquelle un moyen adhésif (110) est prévu sur la surface interne de ladite bande.

3. Bande de tension selon la revendication 2, dans laquelle ledit moyen adhésif (110) est constitué par un matériau fondu thermiquement.

4. Bande de tension selon la revendication 3, dans laquelle ledit moyen adhésif (110) est fondu de manière à présenter une adhérence au niveau de température de 150 à 200°C.

5. Bande de tension pour un tube à rayons cathodiques selon l'une quelconque des revendications précédentes, dans laquelle le matériau de la bande de tension inclut un matériau conducteur.

6. Bande de tension selon la revendication 5, dans laquelle ledit matériau conducteur est au moins un matériau choisi parmi le graphite et la ferrite.

7. Bande de tension selon l'une quelconque des revendications précédentes, dans laquelle la longueur desdites fibres de verre est dans la plage de 3 à 12 mm.

8. Bande de tension selon l'une quelconque des revendications précédentes, dans laquelle le diamètre des fibres de verre est dans la plage de 6 à 13 µm.

9. Bande de tension selon l'une quelconque des revendications précédentes, dans laquelle le rapport de la quantité dudit polyamide sur la quantité des fibres de verre est d'environ 3:7 à 7:3.

10. Bande de tension selon l'une quelconque des revendications précédentes, dans laquelle une pluralité de pattes de montage (200 ; 210) sont combinées avec le côté externe de ladite bande.

11. Bande de tension selon la revendication 10, dans laquelle lesdites pattes de montage (200) sont formées d'un seul tenant avec ladite bande.

12. Bande de tension selon la revendication 10, dans laquelle lesdites pattes de montage (210) sont réalisées séparément et sont noyées dans la surface externe de ladite bande.

13. Bande de tension selon la revendication 12, dans laquelle les pattes de montage sont en un matériau métallique.

14. Bande de tension selon la revendication 12, dans laquelle les pattes de montage sont en un matériau non métallique.

15. Bande de tension selon l'une quelconque des revendications précédentes, dans laquelle le rapport de la circonférence interne de ladite bande de tension sur la circonférence externe de la partie de jupe (32) du panneau du tube à rayons cathodiques est dans la plage de 98,79 à 99,90 % avant que ladite bande ne soit montée sur le tube à rayons cathodiques.

16. Tube à rayons cathodiques comprenant un panneau comportant une partie de jupe (32), dans lequel la partie de jupe est fixée à l'aide d'une bande de tension telle que revendiquée selon l'une quelconque des revendications précédentes.
